# EUROPÄISCHE PATENTSCHRIFT

(11) **EP 0 692 344 B1**
(45) Veröffentlichungstag und Bekanntmachung des Hinweises auf die Patenterteilung: **05.09.2001**
(21) Anmeldenummer: 95108949.9
(22) Anmeldetag: 10.06.1995
(51) Int. Cl.: B25B 27/00, F16L 37/00

(54) **Montageelement für ein Einsatzteil insbesondere einer Druckleitungs-Anschlussvorrichtung**
Mounting element for an insert part, in particular for a pressure line connector
Elément de montage pour une pièce d'insertion en particulier pour un raccord à pression

(30) Priorität: 15.07.1994 DE 4425131
(43) Veröffentlichungstag der Anmeldung: 17.01.1996
(73) Patentinhaber: Armaturenfabrik Hermann Voss GmbH + Co. KG, 51688 Wipperfürth (DE)
(72) Erfinder: Beister, Hans-Jürgen, D-51427 Bergisch-Gladbach (DE)
(74) Vertreter: Patentanwälte Dr. Solf & Zapf

(56) Entgegenhaltungen:
- EP-A- 0 005 865
- WO-A-95/10002
- US-A- 4 915 136

## Beschreibung

Die vorliegende Erfindung betrifft ein neuartiges Montageelement als Hilfsmittel zum Montieren einer Druckleitungs-Anschlußvorrichtung sowie eine aus dem Montageelement und aus einem Einsatzteil eines Gehäuses der Druckleitungs-Anschlußvorrichtung gebildete Montageeinheit.

Es sind hier solche Anschlußvorrichtungen angesprochen, wie sie beispielsweise aus der EP-B1-0 005 865 bekannt sind. Diese Anschlußvorrichtung weist ein Gehäuseteil mit einer Einstecköffnung zum umfänglich abgedichteten Einstecken eines Steckerteils auf. Zur Arretierung des eingesteckten Steckerteils ist in einer inneren Ringkammer des Gehäuseteils ein - hier als geschlitzter, radialelastisch verformbarer Haltering ausgebildetes - Halteelement gelagert, welches rastend bereichsweise in eine Außenringnut des Steckerteils eingreift. Um nachfolgend das Steckerteil wieder lösen zu können, ist das Gehäuseteil zweiteilig ausgebildet; es besteht aus einem Basisteil und einem Einsatzteil, welches in der Regel als lösbar mit einem Außengewindeabschnitt in ein Innengewinde des Basisteils einschraubbares Einschraubteil ausgebildet ist, wobei das Einsatzteil eine axiale Durchgangsbohrung aufweist, die einen Teil der Aufnahmeöffnung für das Steckerteil bildet. Hierbei ist die das Halteelement aufnehmende Ringkammer zwischen dem Basisteil und dem Einsatzteil gebildet. Hierdurch kann nach Lösen bzw. Herausschrauben des Einsatzteils das Steckerteil zusammen mit dem in die Steckerringnut eingreifenden Halteelement entnommen werden. Zudem ist bei solchen Anschlußvorrichtungen in der Regel im Grundbereich der Aufnahmeöffnung ein elastisches Ringelement angeordnet, welches durch im wesentlichen stirnseitige Anlage des Steckerteils eine zusätzliche Abdichtung sowie auch eine axiale, in Löserichtung wirkende Vorspannkraft auf das Steckerteil bewirkt.

Bei einer solchen Anschlußvorrichtung ist bislang die Montage recht aufwendig, indem insbesondere manuell zunächst das elastische Ringelement und das Halteelement in das Basisteil eingelegt werden müssen, bevor das Einsatzteil in das Basisteil eingesetzt wird.

Die nachveröffentlichte Anmeldung WO-A-95 10002 beschreibt einen Einsetzstift zur Montage von Dichtungen in einen Schnellverbinder für Fluidleitungen, sowie zur Montage eines Halteelementes und von Ringen bzw. Hülsen, die zur Kammerung der Dichtungen vorgesehen sind. Der Einsatzstift besitzt einen Schaft, einen gegenüber dem Schaft vergrößerten Einschubbegrenzer und einen Handgriff. Das Halteelement kann auf einem gegenüber dem übrigen Schaft im Durchmesser vergrößerten Schaftabschnitt lösbar plaziert werden, während zur Montage elastische Beine am Schaftende zur Aufnahme der Dichtungen dienen.

Aus der US-A-4 915 136 ist ein Einsetzstecker bekannt, der dazu dient, in montagefreundlicher Weise mindestens ein Dichtungselement in einer axialen Bohrung eines Gehäuses einer Schnellverbindungseinrichtung für Rohrleitungen zu installieren und außerdem in dem Gehäuse ein einsetzbares Halteelement lösbar zu sichern. Die axiale Bohrung dient dabei zur Aufnahme eines Leitungsendes. Eine elastomere ringartige Dichtung in der Bohrung gewährleistet eine fluiddichte Abdichtung zwischen der Leitung und dem Gehäuse. Eine ringförmige Buchse in der Bohrung positioniert die Dichtung und führt das Rohrleitungsende in eine Lagerposition relativ zur Bohrung. Das Halteelement kann lösbar am Gehäuse befestigt werden und wirkt dann mit einem ringförmigen Vorsprung an der Leitung zusammen, um die Leitung in ihrer Arbeitsstellung innerhalb der Bohrung zu sichern. Das Halteelement hat elastisch deformierbare Beine, die beim Einsetzen der Leitung in die Gehäusebohrung über die Arretierwand des Leitungsvorsprungs schnappen. Der als Montageelement verwendete Einsetzstecker weist einen Körper mit einem stabförmigen Abschnitt und mit einem Stirnabschnitt auf. Der stabförmige Abschnitt ist als Träger für die Dichtungselemente und für das Halteelement ausgebildet, welche jeweils koaxial auf dem stabförmigen Abschnitt angeordnet werden können. Zur Aufnahme der Dichtungselemente und des Halteelementes sind dazu an dem stabförmigen Abschnitt ringförmige Umfangsnuten vorgesehen. Der Abschnitt besitzt einen äußeren Durchmesser, der demjenigen einer Leitung entspricht, die mit dem Gehäuse verbunden werden soll, und kann massiv oder als Hohlzylinder ausgebildet sein, wobei der Hohlzylinder einseitig durch einen dem Stirnabschnitt gegenüberliegenden Boden verschlossen ist. Der Stirnabschnitt seinerseits ist derart ausgebildet, daß er die axiale Bohrung anderseitig im wesentlichen abdeckt, wobei er deren Rand radial überragt.

Der vorliegenden Erfindung liegt die Aufgabe zugrunde, die Montage des Einsatzteils und der sonstigen vorhandenen Dichtungs- bzw. Arretierelemente bei Anschlußvorrichtungen, wie sie aus der EP-B1-0 005 865 bekannt sind, bei vereinfachter Montage und der Möglichkeit eines automatischen, maschinellen Montierens mit hoher Produktivität und geringen Kosten, - insbesondere durch Einsatz einer aus dem Montageelement und aus einem Einsatzteil eines Gehäuses der Druckleitungs-Anschlußvorrichtung gebildeten Montageeinheit - insbesondere verschmutzungsgeschützt zu gestalten.

Erfindungsgemäß wird dies durch ein Montageelement mit den nachstehend aufgeführten Merkmalen erreicht, das als Hilfsmittel zum Montieren einer Druckleitungs-Anschlußvorrichtung dient, deren Merkmale im folgenden ebenfalls aufgeführt sind, und das mit dem Einsatzteil eines Gehäuses der Druckleitungs-Anschlußvorrichtung die erfindungsgemäße Montageeinheit bildet:
- Die Druckleitungs-Anschlußvorrichtung weist ein zweiteiliges, aus einem Basisteil und einem lösbar in das Basisteil einsetzbaren Einsatzteil bestehendes Gehäuseteil mit einer Aufnahmeöffnung zum Einstecken eines Steckerteils auf.
- Das Einsatzteil weist dabei eine einen Teil der Stekker-Aufnahme-Öffnung bildende Durchgangsbohrung auf.
- Zwischen dem Basisteil und dem Einsatzteil ist eine innere Ringkammer zur Aufnahme eines radialelastisch verformbaren, zum Arretieren des eingesteckten Stekkerteils mit einer an diesem vorhandenen Außenringnut zusammenwirkenden Halteelementes gebildet.
- Das Montageelement weist Verbindungsmittel zur lösbaren Halterung des Montageelementes in dem Einsatzteil sowie Fixiermittel zum kraft- oder kraftformschlüssigen, durch axiale Relativbewegung lösbaren Vorfixieren des Halteelementes in einer zumindest annähernd lagerichtigen Zuordnung relativ zu dem Einsatzteil auf.
- Die Fixiermittel überragen in dieser Zuordnung das Einsatzteil auf einer Seite.
- Die Verbindungsmittel bestehen einerseits aus einem kraftschlüssig, klemmend in die Durchgangsbohrung des Einsatzteils einsteckbaren, in radialer Richtung elastisch deformierbaren Steckabschnitt sowie andererseits aus einem Einsteckbegrenzungselement, welches auf einer den Fixiermitteln gegenüberliegenden Seite des Montageelementes einen Endanschlag für das Einsatzteil bildet.
- Der Steckabschnitt und das Einsteckbegrenzungselement sind dabei scheibenförmig ausgebildet und relativ zueinander und zu dem Einsatzteil beabstandet angeordnet, derart, daß im in das Einsatzteil eingesetzten Zustand dessen Durchgangsbohrung beidseitig schmutzdicht verschlossen ist.

Das erfindungsgemäße Montageelment weist somit einerseits Verbindungsmittel zur lösbaren (vorübergehenden) Halterung des Montageelementes in dem Einsatzteil sowie andererseits Fixiermittel zum Vorfixieren des Halteelementes und/oder des elastischen Ringelementes in einer zumindest annähernd lagerichtigen Zuordnung relativ zu (bzw. an) dem Einsatzteil auf. Auf diese Weise reduziert sich durch das erfindungsgemäße Montageelement der eigentliche Montagevorgang auf das Einsetzen bzw. Einschrauben des Einsatzteils in das Basisteil, denn es kann vorteilhafterweise zuvor eine vormontierte Einheit gebildet werden, indem an dem in dem Einsatzteil lösbar befestigten Montageelement das Halteelement und vorzugsweise auch das elastische Ringelement vorfixiert werden. Durch die erfindungsgemäße Ausbildung und Beabstandung des Steckabschnittes und des Einsteckbegrenzungselementes ist der Innenraum des Einsatzteils vorteilhafterweise vor Verschmutzungen geschützt.

Ferner wird auch ein äußerer Dichtring auf dem Einsatzteil vormontiert, der dann den Spalt zum Basisteil abdichten soll. Es kann dann diese so gebildete Einheit manuell, insbesondere aber auch maschinell (automatisch) in das Basisteil eingesetzt werden, wodurch praktisch selbsttätig eine Plazierung des Halteelementes und des elastischen Ringelementes erfolgt. Abschließend braucht lediglich noch das erfindungsgemäße Montageelement aus der Aufnahmeöffnung herausgezogen zu werden; das Halteelement und das elastische Ringelement verbleiben dann innerhalb des Gehäuseteils. Durch die Erfindung ist somit keine separate Montage der Einzelteile mehr erforderlich, so daß vorteilhafterweise auch ein automatisches Verschrauben leicht realisiert werden kann. Hierzu können die vormontierten "Einsatzteil-Einheiten" auch in größeren Stückzahlen magaziniert werden, so daß eine kontinuierliche Montage mit sehr hoher Produktivität möglich ist. Zudem können die vormontierten Einheiten auch separat, unabhängig vom Basisteil gelagert und gehandelt werden, wobei sie sofort montagebereit sind.

Weitere vorteilhafte Ausgestaltungsmerkmale der Erfindung sind in den Unteransprüchen sowie in der folgenden Beschreibung enthalten.

Anhand eines in der Zeichnung veranschaulichten, bevorzugten Ausführungs- und Anwendungsbeispiels soll nun die Erfindung näher erläutert werden. Dabei zeigen:
- Fig. 1: einen Axialschnitt durch ein fertig montiertes Gehäuseteil einer Anschlußvorrichtung ohne Darstellung des Steckerteils,
- Fig. 2: einen Axialschnitt des Einsatzteils ( insbesondere Hohlschraube) der Anschlußvorrichtung nach Fig. 1 vor der Montage zusammen mit einem erfindungsgemäßen Montageelement (teilgeschnitten) vor der Einsteckverbindung mit dem Einsatzteil,
- Fig. 3: eine Ansicht analog zu Fig. 2, jedoch im in das Einsatzteil eingesteckten Zustand des erfindungsgemäßen Montageelementes,
- Fig. 4: eine Ansicht analog zu Fig. 3, jedoch zusätzlich mit einem vorfixierten Halteelement,
- Fig. 5: eine Ansicht analog zu Fig. 3 und 4, jedoch zusätzlich mit einem vorfixierten elastischen Ringelement,
- Fig. 6: eine Ansicht der vormontierten Einheit gemäß Fig. 5, jedoch in einer um 180° gedrehten Seitenansicht in Pfeilrichtung VI gemäß Fig. 5, und
- Fig. 7: in einer verkleinerten Draufsicht in Pfeilrichtung VII gemäß Fig. 6 mehrere "magazinierte Einsatzteil-Einheiten", die schrittweise einer automatischen Montagestation (insbesondere Verschraubungsstation zugeführt werden.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen das entsprechende Teil mit dem gleichen Bezugszeichen ebenfalls zu erkennen ist.

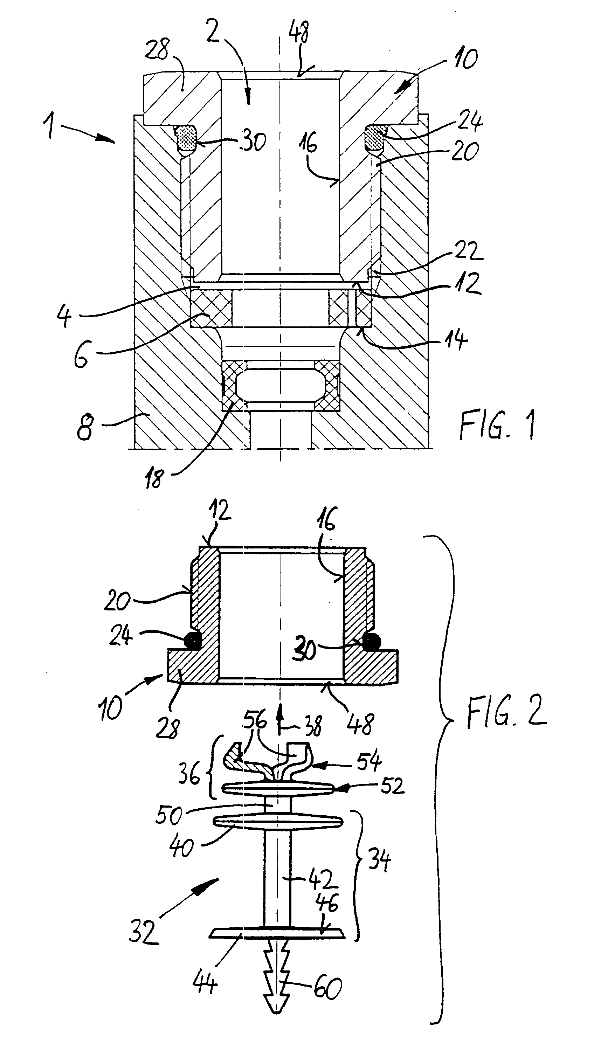

In Fig. 1 ist ein Gehäuseteil 1 einer Anschlußvorrichtung dargestellt. Das Gehäuseteil 1 weist eine Aufnahmeöffnung 2 auf, in die ein nicht dargestelltes, beispielsweise mit einer Druckleitung verbundenes Steckerteil umfänglich abgedichtet einsteckbar ist. Innerhalb der Aufnahmeöffnung 2 ist in einer inneren Ringkammer 4 ein als radialelastisch verformbarer Haltering ausgebildetes Halteelement 6 gelagert, welches zum Arretieren des in die Aufnahmeöffnung 2 eingesteckten Steckerteils dient, indem das Halteelement 6 nach dem Einstecken des Steckerteils bereichsweise in eine an diesem gebildete Außenringnut einrastet. Um nachfolgend eine Lösbarkeit des Steckerteils zu gewährleisten, ist das Gehäuseteil 1 zweiteilig ausgebildet, und zwar besteht es aus einem Basisteil 8 und einem lösbar in das Basisteil 8 eingesetzten Einsatzteil 10, wobei die das Halteelement 6 aufnehmende Ringkammer 4 zwischen einer Stirnfläche 12 des Einsatzteils 10 und einer Bohrungsstufenfläche 14 des Basisteils 8 gebildet ist. Hierdurch kann das Steckerteil zusammen mit dem in seiner Außenringnut sitzenden Halteelement 6 entnommen werden, nachdem das Einsatzteil 10 vom Basisteil 8 gelöst wurde.

Das Basisteil 8 kann Teil eines beliebigen Anschlußgehäuses, beispielsweise auch eines Ventilgehäuses, sein. Das Einsatzteil 10 weist eine axiale Durchgangsbohrung 16 auf, die einen Teil der Aufnahmeöffnung 2 bildet. Im der Öffnungsseite, von der her der Stecker einsteckbar ist, abgekehrten Bereich der Aufnahmeöffnung 2 (d.h. "unterhalb" des Halteelementes 6) ist ein (gummi-)elastisches Ringelement 18 angeordnet, welches eine zusätzliche Abdichtung des Steckerteils sowie vorteilhafterweise auch eine axiale, in Löserichtung wirkende Vorspannkraft auf das Steckerteil bewirkt.

Wie weiterhin in Fig. 1 dargestellt ist, ist das Einsatzteil 10 bevorzugt als Einschraubteil mit einem Außengewindeabschnitt 20 ausgebildet, mit dem es in ein Innengewinde 22 des Basisteils 8 einschraubbar ist. Allerdings kann das Einsatzteil z.B. auch als Steckteil mit einem Bajonettverschluß oder dergleichen Haltemitteln ausgebildet sein. Zur Abdichtung zwischen dem Basisteil 8 und dem Einsatzteil 10 ist ein elastischer Dichtring 24 in einer zwischen den beiden Teilen gebildeten Dichtringkammer angeordnet, wobei diese Dichtringkammer teilweise von einer äußeren Ringnut 30 des Einsatzteils 10 gebildet bzw. begrenzt wird. Diese Ringnut 30 ist bevorzugt im Bereich zwischen dem Außengewindeabschnitt 20 und einem insbesondere als Außensechskant ausgebildeten Betätigungsabschnitt 28 des Einsatzteils 10 angeordnet.

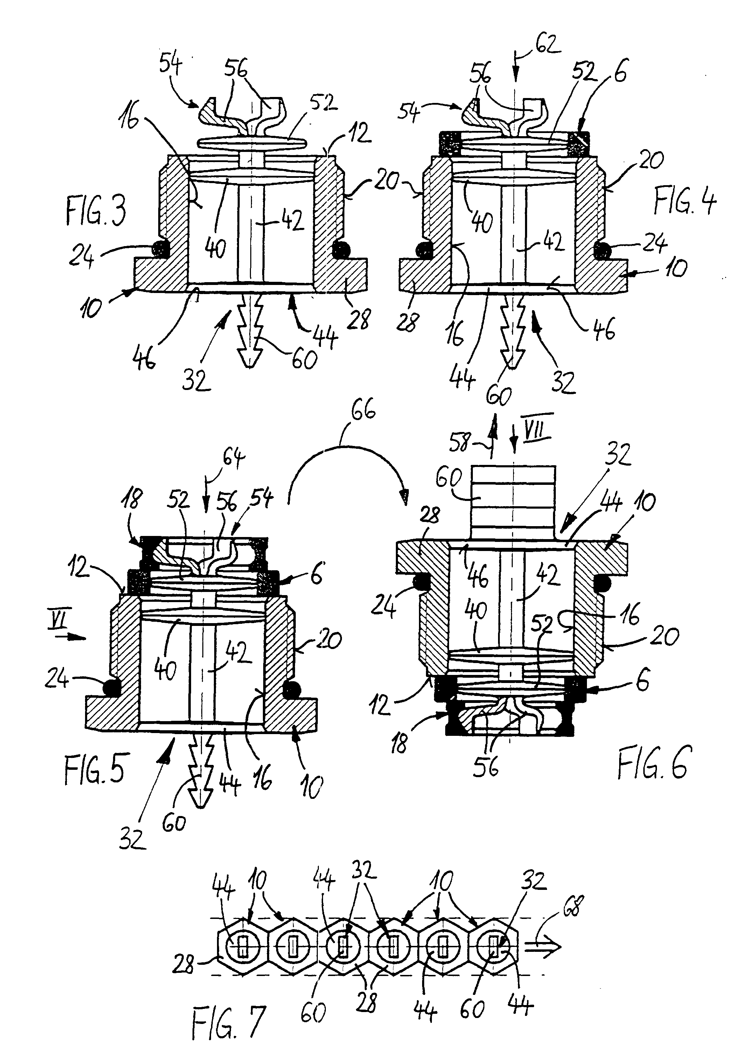

Gemäß Fig. 2 bis 6 ist nun erfindungsgemäß ein Montageelement 32 als Hilfsmittel für die Montage des Einsatzteils 10 und des Halteelementes 6 und vorzugsweise auch des elastischen Ringelementes 18 vorgesehen. Wie sich aus Fig. 2 ergibt, weist das Montageelement 32 einerseits Verbindungsmittel 34 zur lösbaren, vorübergehenden Halterung des Montagelementes 32 in der Durchgangsbohrung 16 des Einsatzteils 10 sowie andererseits Fixiermittel 36 zum Vorfixieren des Halteelementes 6 und vorzugsweise auch des elastischen Ringelementes 18 jeweils in einer zumindest annähernd lagerichtigen Zuordnung - entsprechend der späteren Einbaulage gemäß Fig. 1 - an dem Einsatzteil 10 auf. Hierzu ist das Montageelement 32 von der Einsteckseite her in Pfeilrichtung 38 in die Durchgangsbohrung 16 des Einsatzteils 10 einsteckbar, und zwar so weit, bis die Fixiermittel 36 das Einsatzteil 10 bzw. dessen Stirnfläche 12 auf der anderen Seite überragen, so daß dann dort das Halteelement 6 und das Ringelement 18 fixiert werden können. Dieser Ausgangszustand ist in Fig. 3 dargestellt.

In der dargestellten, bevorzugten Ausführungsform des erfindungsgemäßen Montageelementes 32 ist als wesentlichster Bestandteil der Verbindungsmittel 34 ein Steckabschnitt 40 vorgesehen, der kraftschlüssig, d.h. klemmend, in die Durchgangsbohrung 16 des Einsatzteils 10 einsteckbar ist. Dabei ist dieser Steckabschnitt 40 bevorzugt kreisscheibenförmig ausgebildet, und er geht von einem zentrischen, axialen Zapfen 42 aus. Der kreisscheibenförmige Steckabschnitt 40 weist einen Außendurchmesser auf, der zur klemmenden, kraftschlüssigen Halterung geringfügig größer als der Innendurchmesser der Durchgangsbohrung 16 des Einsatzteils 10 dimensioniert ist. Hierbei besteht zweckmäßigerweise das gesamte Montageelement 32 aus einem relativ elastischen Kunststoffmaterial. Die Kreisscheibenkontur des Steckabschnittes 40 verjüngt sich ausgehend vom zentrischen Zapfen 42 in radialer Richtung nach außen, so daß im wesentlichen nur eine kreislinienförmige Anlage in der Durchgangsbohrung 16 erreicht wird.

Zu den Verbindungsmitteln 34 gehört noch ein - insbesondere ebenfalls kreisscheibenförmig ausgebildetes - Einsteckbegrenzungselement 44, welches mit dem Steckabschnitt 40 über den zentrischen Zapfen 42 verbunden ist. Vorzugsweise ist das kreisscheibenförmige Einsteckbegrenzungselement mit einer angefasten Umfangsfläche 46 in eine inneren Anfasung 48 der Durchgangsbohrung 16 des Einsatzteils 10 "verschlußdeckelartig" einsetzbar. Das Einsteckbegrenzungselement 44 schließt dann - siehe Fig. 3 bis 6 - bündig mit der äußeren Oberfläche des Betätigungselementes 28 ab. Das Einsteckbegrenzungselement 44 bildet so einen Endanschlag für die Einsteckbewegung des Montageelementes 32 in die Durchgangsbohrung 16. Hierbei ist der Steckabschnitt 40 über den Zapfen 42 derart weit von dem Einsteckbegrenzungselement 44 beabstandet, daß der Steckabschnitt 40 etwa im gegenüberliegenden Endbereich der Durchgangsbohrung 16 angeordnet ist. Auf diese Weise ist der Innenraum des Einsatzteils 10 praktisch beidseitig verschlossen, so daß er vorteilhafterweise vor Verschmutzungen geschützt ist.

Was nun die Fixiermittel 36 betrifft, so sind diese mit dem Steckabschnitt 40 vorzugsweise über einen zentrischen, axialen Verbindungszapfen 50 verbunden. An diesen Verbindungszapfen 50 schließt sich zunächst ein Halterungsabschnitt 52 für das Halteelement 6 und an dieses vorzugsweise eine Halteeinrichtung 54 für das elastische Ringelement 18 an.

Der Halterungsabschnitt 52 ist - etwa analog zu dem Steckabschnitt 40 - kreisscheibenförmig mit einem derart dimensionierten Außendurchmesser ausgebildet, daß das bevorzugt ringklammerartige Halteelement 6 auf dem Außenumfang des Halterungsabschnittes 52 kraftschlüssig oder kraftformschlüssig so fixierbar ist, daß ein Lösen durch axiale Relativbewegung möglich ist. Der kreisscheibenförmige Halterungsabschanitt 52 ist im Durchmesser kleiner als der Steckabschnitt 40.

Die zum Vorfixieren des elastischen Ringelementes 18 vorgesehene Halteeinrichtung 54 besteht im bevorzugten Ausführungsbeispiel aus drei im wesentlichen radialen, in Umfangsrichtung um vorzugsweise jeweils 120° voneinander beabstandeten und derart elastisch verformbaren Federarmen 56, daß einerseits das Ringelement 18 kraft- oder kraftformschlüssig auf die Enden der Federarme 56 aufsetzbar ist und andererseits bei einer axialen Bewegung des Montageelementes 32 in Herausziehrichtung (Pfeil 58 in Fig. 6) relativ zu dem Ringelement 18 die Federarme 56 mit ihren Enden schräg in axialer Richtung und dadurch radial nach innen verformt werden, wodurch das Ringelement 18 freigegeben wird. Diese Funktion kann durch eine entsprechend ausgebildete Schrägflächen-Kontur der Enden der Federarme 56 unterstützt werden.

Das erfindungsgemäße Montageelement 32 besitzt nun ferner auf seiner den Fixiermitteln 36 axial abgekehrten Seite ein Griffstück 60, welches insbesondere zum Herausziehen des Montageelementes 32 in Pfeilrichtung 58 gemäß Fig. 6 manuell und/oder maschinell (automatisch) ergriffen werden kann. Zudem kann über das Griffstück 60 auch die gesamte vormontierte Einheit automatisch positioniert werden. Wie dargestellt, ist das Griffstück 60 bevorzugt laschenartig mit einer oberflächigen Querstrukturierung ausgebildet und schließt sich unmittelbar an das Einsteckbegrenzungselement 44 an.

Anhand der Fig. 3 bis 7 soll nun noch kurz die Funktion bei der Vormontage kurz erläutert werden. Ausgehend von dem in Fig. 3 dargestellten Zustand, wobei das Montageelement 32 in das Einsatzteil 10 eingesetzt ist, wird gemäß Fig. 4 zunächst in Pfeilrichtung 62 das Halteelement 6 auf den Halterungsabschnitt 52 aufgesetzt. Dann wird gemäß Fig. 5 in Pfeilrichtung 64 das elastische Ringelement 18 auf die Federarme 56 aufgesetzt. Anschließend oder aber bereits zuvor wird der Dichtring 24 in der Ringnut 30 des Einsatzteils 10 montiert. Zur eigentlichen Montage, d.h. zur insbesondere schraubgemäßen Verbindung mit dem Basisteil 8, wird die gesamte, so gebildete Vormontageeinheit in Pfeilrichtung 66 um 180° gedreht und auf die Seite des elastischen Ringelementes 18 gestellt. In dieser Ausrichtung kann gemäß Fig.7 ein Zuführen in Pfeilrichtung 68 zu einer nicht dargestellten Montage- bzw. Verchraubungseinheit erfolgen. Diese Verschraubungseinheit verschraubt die Einsatzteile 10 mit jeweils einem Basisteil 8, und vorzugsweise wird dann ebenfalls jeweils automatisch das erfindungsgemäße Montageelement 32 herausgezogen. Das Halteelement 6 stützt sich dann an der Stirnfläche 12 des Einsatzteils 10 ab, so daß es vom Halterungsabschnitt 52 getrennt wird. Entsprechend stützt sich dann das Ringelement 18 am Halteelement 6 ab, so daß auch die Halteeinrichtung 54 aus dem Ringelement 18 herausgezogen wird.

## Patentansprüche

1. Montageelement (32) als Hilfsmittel zum Montieren einer Druckleitungs-Anschlußvorrichtung, die ein zweiteiliges, aus einem Basisteil (8) und einem lösbar in das Basisteil (8) einsetzbaren Einsatzteil (10) bestehendes Gehäuseteil (10) mit einer Aufnahmeöffnung (2) zum Einstecken eines Steckerteils aufweist, wobei das Einsatzteil (10) eine einen Teil der Stecker-Aufnahme-Öffnung (2) bildende Durchgangsbohrung (16) aufweist und zwischen dem Basisteil (8) und dem Einsatzteil (10) eine innere Ringkammer (4) zur Aufnahme eines radialelastisch verformbaren, zum Arretieren des eingesteckten Steckerteils mit einer an diesem vorhandenen Außenringnut zusammenwirkenden Halteelementes (6) gebildet ist, wobei das Montageelement (32) Verbindungsmittel (34) zur lösbaren Halterung des Montageelementes (32) in dem Einsatzteil (10) sowie Fixiermittel (36) zum kraft- oder kraftformschlüssigen, durch axiale Relativbewegung lösbaren Vorfixieren des Halteelementes (6) in einer zumindest annähernd lagerichtigen Zuordnung relativ zu dem Einsatzteil (10) aufweist, wobei die Fixiermittel (36) in dieser Zuordnung das Einsatzteil (10) auf einer Seite überragen, wobei die Verbindungsmittel (34) einerseits aus einem kraftschlüssig, klemmend in die Durchgangsbohrung (16) des Einsatzteils (10) einsteckbaren, in radialer Richtung elastisch deformierbaren Steckabschnitt (40) sowie andererseits aus einem Einsteckbegrenzungselement (44), welches auf einer den Fixiermitteln (36) gegenüberliegenden Seite des Montageelementes (32) einen Endanschlag für das Einsatzteil (10) bildet, bestehen, wobei der Steckabschnitt (40) und das Einsteckbegrenzungselement (44) scheibenförmig ausgebildet und relativ zueinander und zu dem Einsatzteil (10) beabstandet angeordnet sind, derart, daß im in das Einsatzteil (10) eingesetzten Zustand dessen Durchgangsbohrung (16) beidseitig schmutzdicht verschlossen ist.

2. Montageelement nach Anspruch 1,
**dadurch gekennzeichnet,** daß der Steckabschnitt (40) kreisscheibenförmig und von einem zentrischen, axialen Zapfen (42) ausgehend mit einem Außendurchmesser ausgebildet ist, der zur klemmenden Halterung geringfügig größer als der Innendurchmesser der Durchgangsbohrung (16) des Einsatzteils (10) dimensioniert ist

3. Montageelement nach Anspruch 1 oder 2,
**dadurch gekennzeichnet,** daß das insbesondere kreisscheibenförmige Einsteckbegrenzungselement (44) vorzugsweise mit einer angefasten Umfangsfläche (46) in eine innere Anfasung (48) der Durchgangsbohrung (16) des Einsatzteils (10) einsetzbar ist.

4. Montageelement nach einem oder mehreren der Ansprüche 1 bis 3,
**dadurch gekennzeichnet,** daß die Fixiermittel (36) in einem sich - im in das Einsatzteil (10) eingesetzten Zustand - an das Einsatzteil (10) bzw. an dessen zur Begrenzung der das Halteelement (6) aufnehmenden Ringkammer (4) vorgesehene Stirnseite (12) anschließenden Bereich einen Halterungsabschnitt (52) für das Halteelement (6) aufweisen.

5. Montageelement nach Anspruch 4,
**dadurch gekennzeichnet,** daß der Halterungsabschnitt (52) kreisscheibenförmig und von einem zentrischen, axialen Verbindungszapfen (50) ausgehend mit einem derart dimensionierten Außendurchmesser ausgebildet ist, daß das ringklammerartige Halteelement (6) auf dem Halterungsabschnitt (52) kraftschlüssig oder kraftformschlüssig fixierbar ist.

6. Montageelement nach Anspruch 4 oder 5,
**dadurch gekennzeichnet,** daß die Fixiermittel (36) im axialen Anschluß an den Halterungsabschnitt (52) eine Halteeinrichtung (54) zum kraft- oder kraftformschlüssigen Aufsetzen des elastischen Ringelementes (18) aufweisen.

7. Montageelement nach Anspruch 6,
**dadurch gekennzeichnet,** daß die Halteeinrichtung (54) aus mindestens zwei, vorzugsweise aus drei, radialen, derart elastisch verformbaren Federarmen (56) besteht, daß bei einer axialen Bewegung in Herausziehrichtung (58) relativ zu dem auf den Enden der Federarme (56) sitzenden elastischen Ringelement (18) die Federarme (56) radial nach innen verformt werden und dadurch das Ringelement (18) freigegeben wird.

8. Montageelement nach einem oder mehreren der Ansprüche 1 bis 7,
**gekennzeichnet durch** ein auf der den Fixiermitteln (36) abgekehrten Seite angeordnetes Griffstück (60).

9. Vormontageeinheit einer Druckleitungs-Anschlußvorrichtung, die ein zweiteiliges, aus einem Basisteil (8) und einem lösbar in das Basisteil (8) einsetzbaren Einsatzteil (10) bestehendes Gehäuseteil (10) mit einer Aufnahmeöffnung (2) zum Einstecken eines Steckerteils aufweist, wobei das Einsatzteil (10) eine einen Teil der Stecker-Aufnahme-Öffnung (2) bildende Durchgangsbohrung (16) aufweist und zwischen dem Basisteil (8) und dem Einsatzteil (10) eine innere Ringkammer (4) zur Aufnahme eines radialelastisch verformbaren, zum Arretieren des eingesteckten Stekkerteils mit einer an diesem vorhandenen Außenringnut zusammenwirkenden Halteelementes (6) gebildet ist, wobei ein Montagelement (32) nach einem der Ansprüche 1 bis 8 in das Einsatzteil (10) eingesetzt ist und in zumindest lagerichtiger Zuordnung das Halteelement (6) trägt.

10. Vormontageeinheit nach Anspruch 9, wobei die Anschluß-Vorrichtung im Grundbereich der Aufnahmeöffnung (2) des Gehäuseteiles (1) ein elastisches Ringelement (18) aufweist,
**dadurch gekennzeichnet,** daß das in das Einsatzteil (19) eingesetzte Montageelement (32) zusätzlich das elastische Ringelement (18) in zumindest lagerichtiger Zuordnung trägt.

## Claims

1. Assembly element as an aid for assembling a pressure-line connection device which has a two-piece housing part (10) [sic] consisting of a base part (8) and an insert part (10), which can be inserted into the base part (8) in a releasable manner, and having a location opening (2) for inserting a connector part, the insert part (10) having a through-hole (16) forming part of the connector location opening (2), and an inner annular chamber (4) being formed between the base part (8) and the insert part (10), which annular chamber (4) is intended for accommodating a radially elastically deformable retaining element (6) which, in order to lock the inserted connector part, interacts with an outer annular groove present on the latter, the assembly element (32) having connecting means (34) for the releasable retention of the assembly element (32) in the insert part (10) and also fixing means (36) for the frictional or frictional/positive-locking prefixing, releasable by axial relative movement, of the retaining element (6) in an at least approximately correct position relative to the insert part (10), the fixing means (36), in this relative position, projecting beyond the insert part (10) on one side, the connecting means (34) consisting of a push-in section (40) on the one hand, which can be inserted in a frictional, clamping manner into the through-hole (16) of the insert part (10) and is elastically deformable in the radial direction, and of an insertion-limiting element (44) on the other hand, which forms an end stop for the insert part (10) on a side of the assembly element (32) opposite the fixing means (36), the push-in section (40) and the insertion-limiting element (44) being of disc-shaped design and being arranged at a distance apart relative to one another and to the insert part (10) in such a way that, in the state inserted into the insert part (10), the through-hole (16) of the latter is closed in a dirt-proof manner on both sides.

2. Assembly element according to Claim 1, **characterized in that** the push-in section (40) is designed in a circular-disc shape and, starting from a central, axial pin (42), with an outside diameter which, for retention in a clamping manner, is dimensioned to be slightly larger than the inside diameter of the through-hole (16) of the insert part (10).

3. Assembly element according to Claim 1 or 2, **characterized in that** the insertion-limiting element (44), which in particular is in a circular-disc shape, can preferably be inserted with a bevelled circumferential surface (46) into an inner bevel (48) of the through-hole (16) of the insert part (10).

4. Assembly element: according to one or more of Claims 1 to 3, **characterized in that** the fixing means (36) have a mounting section (52) for the retaining element (6) in a region which, in the state inserted into the insert part (10), adjoins the insert part (10) or its end face (12) provided for limiting the annular chamber (4) accommodating the retaining element (6).

5. Assembly element according to Claim 4, **characterized in that** the mounting section (52) is designed in a circular-disc shape and, starting from a central, axial connecting pin (50), with an outside diameter which is dimensioned in such a way that the annular-clamp-like retaining element (6) can be fixed on the mounting section (52) in a frictional or frictional/positive-locking manner.

6. Assembly element according to Claim 4 or 5, **characterized in that** the fixing means (36), axially following the mounting section (52), have a retaining device (54) for mounting the elastic ring element (18) in position in a frictional or frictional/positive-locking manner.

7. Assembly element according to Claim 6, **characterized in that** the retaining device (54) consists of at least two, preferably three, radial spring arms (56) which are elastically deformable in such a way that, during an axial movement in the pull-out direction (58) relative to the elastic ring element (18) sitting on the ends of the spring arms (56), the spring arms (56) are deformed radially inwards and the ring element (18) is released as a result.

8. Assembly element according to one or more of Claims 1 to 7, characterized by a gripping piece (60) -arranged on the side remote from the fixing means (36).

9. Preassembly unit of a pressure-line connection device which has a two-piece housing part (10) [sic] consisting of a base part (8) and an insert part (10), which can be inserted into the base part (8) in a releasable manner, and having a location opening (2) for inserting a connector part, the insert part (10) having a through-hole (16) forming part of the connector location opening (2), and an inner annular chamber (4) being formed between the base part (8) and the insert part (10), which annular chamber (4) is intended for accommodating a radially elastically deformable retaining element (6) which, in order to lock the inserted connector part, interacts with an outer annular groove present on the latter, an assembly element (32) according to one of Claims 1 to 8 being inserted into the insert part (10) and carrying the retaining element (6) in an at least correct relative position.

10. Preassembly unit according to Claim 9, the connection device having an elastic ring element (18) in the bottom region of the location opening (2) of the housing part (1), **characterized in that** the assembly element (32) inserted into the insert part (19) additionally carries the elastic ring element (18) in an at least correct relative position.

## Revendications

1. Elément de montage (32) servant d'auxiliaire pour le montage d'un dispositif de raccordement de conduites sous pression qui comprend une partie boîtier (10) en deux parties, composée d'une partie de base (8) et d'une partie rapportée (10) qui peut être insérée de façon démontable dans la partie de base (10), et possédant une ouverture réceptrice (2) pour l'emmanchement d'une partie mâle, dans lequel la partie rapportée (10) présente un perçage traversant (16) qui forme une partie de l'ouverture réceptrice (2) qui reçoit la partie mâle, et il se forme, entre la partie de base (8) et la partie rapportée (10), une chambre annulaire intérieure (4) destinée à recevoir un élément de maintien (6), déformable élastiquement dans la direction radiale, destiné à bloquer la partie mâle emmanchée et qui coopère avec une gorge annulaire extérieure présente sur celle-ci, l'élément de montage (32) présentant des moyens d'assemblage (34) destinés à retenir l'élément de montage (32) dans la partie rapportée (10) de façon démontable, ainsi que des moyens d'immobilisation (36) destinés à pré-immobiliser l'élément de maintien (6), par action de force ou par action de force et sûreté de forme, et de façon séparable par un déplacement relatif axial, dans une disposition au moins à peu près en bonne position par rapport à la partie rapportée (10), les moyens d'immobilisation (36) débordant sur un côté au-delà de la partie rapportée (10) dans cette disposition, les moyens d'assemblage (34) étant constitués, d'une part, par un segment d'emmanchement (40), déformable élastiquement dans la direction radiale, qui peut être emmanché dans le perçage traversant (16) de la partie rapportée (10) en établissant une liaison par action de force, par coincement et, d'autre part, par un élément (44) de limitation de l'emmanchement qui, sur un côté de l'élément de montage (32) qui est opposé aux moyens d'immobilisation (36), forme une butée de fin de course pour la partie rapportée (10), le segment d'emmanchement (40) et l'élément (44) de limitation de l'emmanchement étant en forme de disque et étant disposés à distance l'un de l'autre et à distance de la partie rapportée (10) de telle manière que, dans l'état emmanché dans la partie rapportée (10), le perçage traversant (16) de celle-ci soit obturé des deux côtés de façon étanche aux corps étrangers.

2. Elément de montage selon la revendication 1, **caractérisé en ce que** le segment d'emmanchement (40) est en forme de disque circulaire et possède, en partant d'une tige axiale centrale (42), un diamètre extérieur qui est légèrement plus grand que le diamètre intérieur du perçage traversant (16) de la partie rapportée (10), pour la fixation par coincement.

3. Elément de montage selon la revendication 1 ou 2, **caractérisé en ce que** l'élément (44) de limitation de l'emmanchement, qui est en particulier en forme de disque circulaire, peut être emboîté dans un chanfrein intérieur (48) du perçage traversant (16) de la partie rapportée (10), de préférence par une surface périphérique chanfreinée (46).

4. Elément de montage selon une ou plusieurs des revendications 1 à 3, **caractérisé en ce que** les moyens d'immobilisation (36) présentent un segment de fixation (52) pour l'élément de maintien (6) dans une région qui - dans l'état emboîté dans la partie rapportée (10) - fait suite à la partie rapportée (10) ou à son côté frontal (12) prévu pour limiter la chambre annulaire (4) qui reçoit l'élément de maintien (6).

5. Elément de montage selon la revendication 4, **caractérisé en ce que** le segment de fixation (52) est: en forme de disque circulaire et présente, en partant d'une tige d'assemblage centrale, axiale (50), un diamètre extérieur dimensionné de manière que l'élément de maintien (6) en forme d'agrafe annulaire, puisse être immobilisé sur le segment de fixation (52) par action de force ou par action de force et sûreté de forme.

6. Elément de montage selon la revendication 4 ou 5, **caractérisé en ce que** les moyens d'immobilisation (36) présentent, à la suite du segment de fixation (52) dans la direction axiale, un dispositif de maintien (54) pour le montage de l'élément annulaire élastique (18) par action de force ou par action de force et sûreté de forme.

7. Elément de montage selon la revendication 6, **caractérisé en ce que** le dispositif de maintien (54) est composé d'au moins deux, de préférence de trois bras élastiques (56) radiaux, capables de se déformer élastiquement de manière qu'en réponse à un déplacement axial dans le sens de l'extraction (58) par rapport à l'élément annulaire élastique (18) monté sur les extrémités des bras élastiques (56), les bras élastiques (56) se déforment radialement vers l'intérieur et, sous cet effet, libèrent l'élément annulaire (18).

8. Elémént de montage selon une ou plusieurs des revendications 1 à 7, caractérisé par une pièce formant poignée (60) disposée sur le côté qui est à l'opposé des moyens d'immobilisation (36).

9. Unité de prémontage d'un dispositif de raccordement de conduites sous pression qui comprend une partie boîtier (10) en deux parties, composée d'une partie de base (8) et d'une partie rapportée (10) qui peut être insérée de façon démontable dans la partie de base (8), et possédant une ouverture réceptrice (2) pour l'emmanchement d'une partie mâle, dans laquelle la partie rapportée (10) présente un perçage traversant (16) qui forme une partie de l'ouverture réceptrice (2) qui reçoit la partie mâle, et il se forme, entre la partie de base (8) et la partie rapportée (10), une chambre annulaire intérieure (4) destinée à recevoir un élément de maintien (6), déformable élastiquement dans la direction radiale, destiné à bloquer la partie mâle emmanchée, et qui coopère avec une gorge annulaire extérieure présente sur celle-ci, un élément de montage (32) selon une des revendications 1 à 8 étant emboîté dans la partie rapportée (10) et portant l'élément de maintien (6) dans une disposition au moins en bonne position

10. Unité de prémontage selon la revendication 9, dans lequel le dispositif de raccordement présente un élément annulaire élastique (18) dans la région de fond de l'ouverture réceptrice (2) de la partie boîtier (1), **caractérisé en ce que** l'élément de montage (32) emboîté dans la partie rapportée (19) porte en supplément l'élément annulaire élastique (18) dans une disposition au moins en bonne position.
